# FASCICULE DE BREVET EUROPEEN

(11) **EP 3 877 640 B1**
(45) Date de publication et mention de la délivrance du brevet: **11.10.2023**
(21) Numéro de dépôt: 19818217.2
(22) Date de dépôt: 05.11.2019
(51) Int. Cl.: F02K 1/72, F02K 1/80, F16J 15/02, F16J 15/06

(54) **JOINT D'ÉTANCHÉITÉ POUR NACELLE DE TURBORÉACTEUR D'AÉRONEF**
DICHTUNGSVERBINDUNG FÜR DIE TRIEBWERKSGONDEL EINES FLUGZEUGES
SEALING JOINT FOR AIRCRAFT TURBOJET ENGINE NACELLE

(30) Priorité: 09.11.2018 FR 1860404
(43) Date de publication de la demande: 15.09.2021
(73) Titulaire: Safran Nacelles, 76700 Gonfreville-l'Orcher (FR)
(72) Inventeur: RENAULT, Cédric, 77550 MOISSY CRAMAYEL (FR); BONNY, Arnaud, 77550 Moissy Cramayel (FR)
(74) Mandataire: Germain Maureau
(86) Numéro de dépôt international: PCT/FR2019/052619
(87) Numéro de publication internationale: WO 2020/094972

(56) Documents cités:
- EP-A1- 2 134 951
- WO-A1-2015/036717
- WO-A1-2015/052442
- FR-A1- 2 920 215

## Description

La présente invention concerne un joint d'étanchéité pour nacelle de turboréacteur d'aéronef, un ensemble d'étanchéité comportant un tel joint, un ensemble propulsif pour aéronef comportant un tel ensemble d'étanchéité, et un procédé de démontage d'un tel ensemble d'étanchéité.

La présente invention concerne le domaine des joints d'étanchéité venant par exemple équiper un inverseur de poussée de nacelle de turboréacteur d'aéronef.

Un aéronef est mû par plusieurs ensembles propulsifs comprenant chacun un turboréacteur logé dans une nacelle. Une nacelle présente généralement une structure tubulaire suivant un axe longitudinal comprenant une section amont fixe constituée par une entrée d'air en amont du turboréacteur, une section médiane fixe destinée à entourer une soufflante du turboréacteur, et une section aval pouvant abriter un dispositif d'inversion de poussée et destinée à entourer la chambre de combustion du turboréacteur, l'amont et l'aval de la nacelle étant définis par référence au sens d'écoulement du flux d'air dans la nacelle en fonctionnement jet direct, l'amont de la nacelle correspondant à une partie de la nacelle par laquelle le flux d'air pénètre, et l'aval correspondant à une zone d'éjection dudit flux d'air.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux d'air froid traversant la nacelle, et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend un ou plusieurs capots mobiles déplaçables entre, d'une part, une position déployée dans laquelle ils ouvrent dans la nacelle un passage destiné au flux dévié, et d'autre part, une position rétractée dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le ou les capot(s) d'inverseur n'ayant qu'une simple fonction de coulissage sensiblement le long de l'axe longitudinal de la nacelle et visant à découvrir ou recouvrir ces grilles. Des portes de blocage complémentaires, également appelées volets, activées par le coulissement du capotage, permettent généralement une fermeture de la veine en aval des grilles de manière à optimiser la réorientation du flux froid.

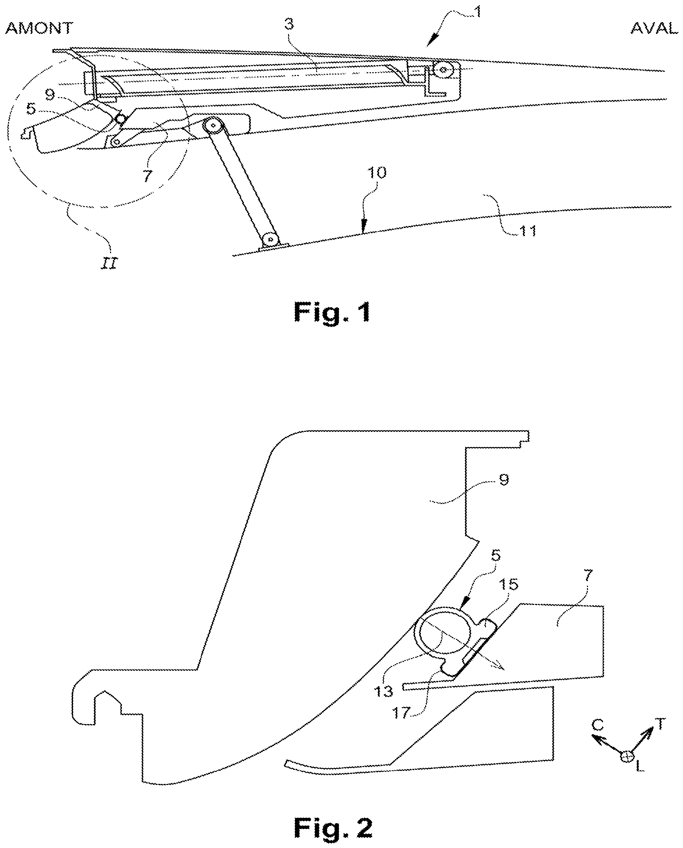

On a représenté à la figure 1 un tel inverseur de poussée 1 à grilles 3. Il est nécessaire de prévoir un joint d'étanchéité 5 en matériau élastomère monté sur le capot 7 et venant en contact avec un bord de déviation 9 du turboréacteur 10 lorsque l'inverseur est en position fermée.

Dans cette position de fonctionnement en jet direct, il ne faut pas que de l'air circulant dans la veine d'air froid 11 sous l'effet de la soufflante du turboréacteur (non visible) puisse s'échapper de cette veine en direction des grilles 3 : le joint 5 permet de réaliser cette étanchéité.

Sous l'effet de la pression exercée par le bord de déviation 9, symbolisée par la flèche 13 de la figure 2 illustrant en vue agrandie la zone II de la figure 1, le talon 15 du joint d'étanchéité 5 a tendance à sortir du support de joint 17 monté sur le capot 7 : le joint n'assure alors plus sa fonction d'étanchéité, et les pertes de performance sont alors importantes.

L'intervention nécessaire pour remettre le joint 5 en place dans son support 17 est coûteuse, et nécessite une immobilisation de l'avion. Les documents WO2015052443, EP2134951 et FR2920215 divulguent des joints d'étanchéité de l'art antérieur.

Pour essayer de pallier ce problème, on en arrive à coller le joint 5 au fond de son support 17 : ceci n'est toutefois pas satisfaisant, d'une part parce que malgré la présence de colle, le joint a tendance à sortir de son support, et d'autre part parce que la colle rend compliquées les opérations de remplacement du joint en cas d'usure.

La présente invention vise à s'affranchir des inconvénients ci-dessus, et concerne pour ce faire un joint d'étanchéité pour nacelle de turboréacteur d'aéronef, ledit joint comportant un talon destiné à être monté dans un support de joint, remarquable en ce que ledit talon comporte :
- une protubérance de retenue, s'étendant selon une direction sensiblement transverse à un axe longitudinal dudit joint d'étanchéité, ladite protubérance de retenue étant destinée à traverser ledit support de joint lorsque ledit joint d'étanchéité est monté dans son support, et/ou
   une lèvre d'étanchéité s'étendant sous ledit talon, selon une direction sensiblement parallèle audit axe longitudinal dudit joint d'étanchéité, conçue pour être comprimée sur le support de joint lorsque ledit joint d'étanchéité est monté dans son support.

Ainsi, en prévoyant un joint d'étanchéité comportant une protubérance de retenue transverse à l'axe longitudinal du joint d'étanchéité et destinée à traverser le support de joint lorsque le joint d'étanchéité est monté dans son support, on s'affranchit de la présence de colle entre le joint d'étanchéité et son support. On simplifie alors considérablement par rapport à l'art antérieur les opérations de montage et de démontage du joint dans son support.

En prévoyant une lèvre d'étanchéité qui s'étend longitudinalement sous le talon du joint et qui est comprimée sur le support de joint lorsque le joint d'étanchéité est monté dans son support, on réalise l'étanchéité de l'ensemble qui comporte le joint d'étanchéité monté dans son support.

Selon des caractéristiques optionnelles du joint d'étanchéité selon l'invention :
- le joint d'étanchéité comporte une pluralité de protubérances de retenue espacées les unes des autres ;
- dans une réalisation, les protubérances de retenue sont régulièrement espacées les unes des autres ou sont non régulièrement espacées les unes des autres ;
- dans une réalisation, les protubérances de retenue sont réparties en quinconce relativement à l'axe longitudinal du joint d'étanchéité ;
- la protubérance de retenue présente une épaisseur inférieure ou supérieure ou égale à l'épaisseur du talon du joint d'étanchéité ;
- la protubérance de retenue peut comporter une rainure circonférentielle ;
- la lèvre d'étanchéité s'étend sur une longueur inférieure ou égale à la longueur du talon du joint, de façon continue ou de façon discontinue.

La présente invention concerne également un ensemble d'étanchéité comportant :
- un joint d'étanchéité selon l'invention, et
- un support de joint, dans lequel est monté le talon dudit joint d'étanchéité, remarquable en ce que le support de joint comporte un orifice de retenue traversé par la protubérance de retenue dudit joint d'étanchéité et en ce que la lèvre d'étanchéité dudit joint d'étanchéité est comprimée sur ledit support de joint.

La présente invention concerne aussi un ensemble propulsif pour aéronef comportant un turboréacteur et une nacelle supportant ledit turboréacteur, ladite nacelle comportant un dispositif d'inversion de poussée à grilles comportant un capot, mobile entre une position rétractée assurant une continuité aérodynamique de la nacelle pour un fonctionnement de la nacelle en jet direct et entre une position déployée définissant un passage annulaire dans la nacelle pour un fonctionnement de la nacelle en jet inversé, ledit ensemble propulsif étant remarquable en ce qu'il comporte un ensemble d'étanchéité selon l'invention, dans lequel le joint d'étanchéité comporte un corps d'étanchéité supporté par le talon dudit joint d'étanchéité, ledit corps d'étanchéité étant en contact avec un bord de déviation du turboréacteur.

La présente invention concerne enfin un procédé de démontage de l'ensemble d'étanchéité selon l'invention, remarquable en ce qu'il comporte une étape visant à découper la protubérance de retenue au niveau de sa partie qui traverse l'orifice de retenue du joint d'étanchéité puis à retirer le joint d'étanchéité de son support.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un inverseur à grilles muni d'un joint selon une réalisation de l'art antérieur ;
- la figure 2 est une vue de détail de la zone II de la figure 1 ;
- la figure 3 illustre le joint d'étanchéité selon l'invention, en vue isométrique ;
- la figure 4 est une vue en coupe partielle et agrandie selon la ligne IV-IV de la figure 3 ;
- la figure 5 illustre l'ensemble d'étanchéité selon l'invention ;
- la figure 6 illustre l'ensemble d'étanchéité en coupe transversale selon la ligne VI-VI de la figure 5 ;
- la figure 7 est une vue de l'ensemble d'étanchéité centrée sur la protubérance de retenue et représentant une première variante de réalisation de l'orifice de retenue ;
- la figure 8 est une vue similaire à la figure 7, représentant une deuxième variante de réalisation de l'orifice de retenue.

Dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à la figure 1.

En outre, sur l'ensemble des figures, des références identiques ou analogues représentent des organes ou ensembles d'organes identiques ou analogues.

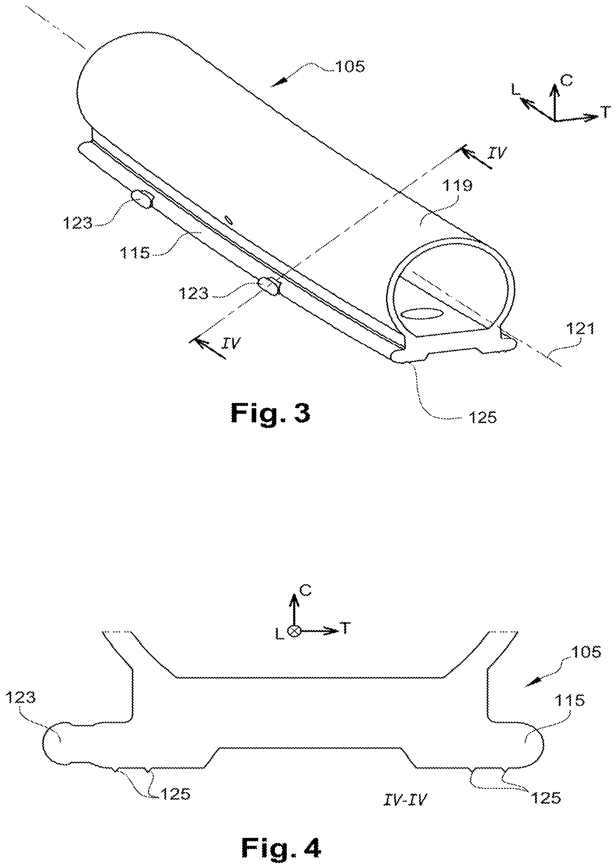

On se réfère à la figure 3 illustrant le joint d'étanchéité 105 selon l'invention en vue isométrique.

Le joint d'étanchéité 105 comprend un corps 119 tubulaire s'étendant sensiblement le long d'une axe longitudinal 121 et un talon 115 supportant le corps 119. Dans la description et les revendications, on adoptera à titre non limitatif la terminologie « longitudinal », « compression » et « transversal » en référence au trièdre direct L, C, T indiqué aux figures, dont l'axe longitudinal L est parallèle à l'axe longitudinal du joint d'étanchéité.

Le corps 119 du joint d'étanchéité est représenté à la figure 3 comme ayant une section transversale (selon le plan CT) globalement circulaire. Bien entendu, ce corps 119 peut présenter une section transverse de forme différente, par exemple rectangulaire, triangulaire, etc.

Le corps 119 du joint d'étanchéité 105 est par exemple destiné à venir en contact avec un bord de déviation du turboréacteur afin d'assurer une étanchéité lorsque le capot mobile du dispositif d'inversion de poussée se trouve en position rétractée dans laquelle il assure une continuité aérodynamique de la nacelle pour un fonctionnement de la nacelle en jet direct. A cet effet, le corps 119 du joint d'étanchéité 105 est réalisé dans un matériau élastomère.

Selon l'invention, le talon 115 du joint d'étanchéité 105 comporte une pluralité de protubérances de retenue 123 ou ergots.

Les protubérances de retenue 123 s'étendent dans une direction sensiblement transverse par rapport à l'axe longitudinal 121 du joint d'étanchéité. Les protubérances de retenue 123 peuvent être espacées les unes des autres le long de l'axe longitudinal 121 du joint 105. A titre d'exemple, une distance de 50 mm à 100 mm peut séparer deux protubérances de retenue 123 consécutives.

De façon préférée, les protubérances de retenue sont régulièrement espacées les unes des autres.

En variante, les protubérances de retenue sont espacées les unes des autres de façon irrégulière.

Les protubérances de retenue 123 sont de préférence réparties en quinconce relativement à l'axe longitudinal 121 du joint d'étanchéité. Selon une variante, les protubérances de retenue 123 peuvent être réparties en face à face les unes des autres relativement à l'axe longitudinal 121 du joint d'étanchéité 105. Selon encore une autre variante non représentée, les protubérances de retenue sont réparties le long d'un côté uniquement du joint d'étanchéité.

Chaque protubérance de retenue 123 adopte de préférence une forme générale oblongue. L'épaisseur de la protubérance de retenue 123 est par exemple inférieure à celle du talon 115 du joint 105. Selon une variante non représentée, l'épaisseur de la protubérance de retenue peut être égale à celle du talon 115 du joint. Selon une autre variante non représentée, l'épaisseur de la protubérance de retenue peut être supérieure à celle du talon du joint.

La protubérance de retenue 123 est réalisée de manière préférée dans un matériau identique à celui utilisé pour obtenir le talon 115 du joint, c'est-à-dire en matériau élastomère. En variante, il peut être envisagé de réaliser la protubérance de retenue dans un matériau différent, comme en plastique ou en métal.

Comme on va le voir dans la suite de la description, les protubérances de retenue 123 sont chacune destinées à traverser un orifice d'un support de joint dans lequel est monté le joint d'étanchéité. Ainsi, la protubérance de retenue 123 assure la fonction de maintien du joint d'étanchéité 105 dans son support.

On se réfère à la figure 4 pour une meilleure visibilité, qui est une vue en coupe partielle et agrandie, selon la ligne IV-IV de la figure 3.

Selon l'invention, le talon 115 du joint d'étanchéité 105 peut, en alternative ou en combinaison des protubérances de retenue 123, comporter un ensemble de lèvres d'étanchéité 125 ou godrons s'étendant sous le talon 115.

Selon l'exemple représenté, quatre lèvres d'étanchéité s'étendent sous le talon 115 du joint 105. Bien entendu, il peut être envisagé de prévoir selon une variante non illustrée davantage de lèvres d'étanchéité, ou au contraire d'en prévoir moins.

Les lèvres d'étanchéité 125 s'étendent sous le talon 115 du joint 105 selon une direction sensiblement parallèle à l'axe longitudinal 121 du joint. Selon une variante non représentée, les lèvres d'étanchéité s'étendent sous le talon du joint selon un motif géométrique pouvant représenter des créneaux, des chevrons, des zigzags, etc.

Comme on va le voir dans la suite de la description, les lèvres d'étanchéité sont conçues pour être comprimées sur le support de joint qui reçoit le joint lorsque. A cet effet, le matériau utilisé pour réaliser les lèvres d'étanchéité est de préférence un matériau élastomère. La présence de ces lèvres d'étanchéité permet d'assurer l'étanchéité de l'ensemble formé par le joint et son support lorsque le joint est sollicité, par exemple lorsque le bord de déviation exerce une pression sur le corps du joint. En effet, la présence de ces lèvres d'étanchéité permet au joint d'exercer une pression supérieure sur le support de joint, relativement à un montage selon l'art antérieur.

Les lèvres d'étanchéité 125 peuvent s'étendre sur la totalité de la longueur du talon 115 du joint, ou en variante sur une partie seulement de cette longueur.

Aussi, le lèvres d'étanchéité 125 peuvent s'étendre le long du talon du joint de façon continue ou discontinue.

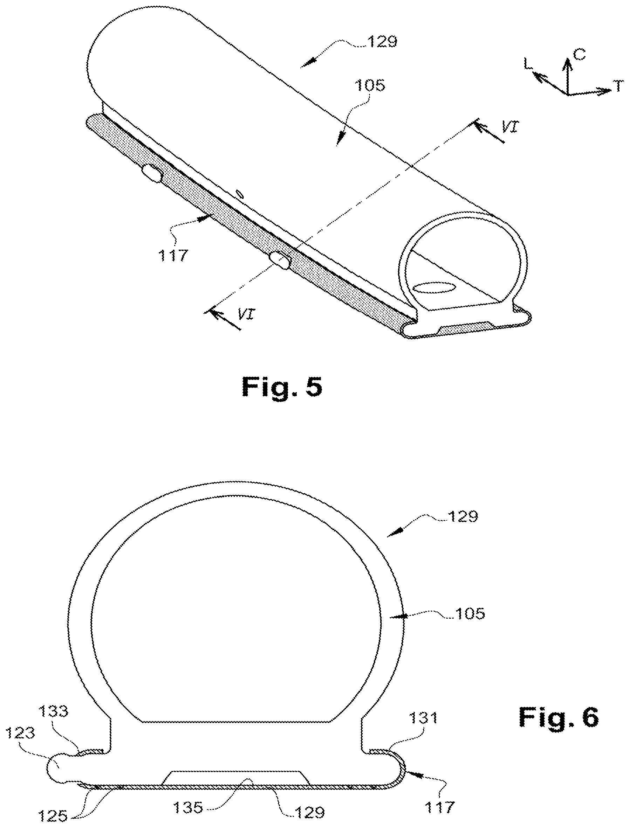

On se réfère à présent aux figures 5 et 6. La figure 5 illustre en vue isométrique le joint d'étanchéité 105 monté dans son support de joint 117, de sorte à définir un ensemble d'étanchéité 129. Afin d'assurer un bon maintien du joint 105 d'étanchéité dans son support 117, le support est de préférence réalisé dans un matériau métallique.

Le support de joint 117 adopte une forme généralement complémentaire à celle du talon 115 joint 105. A cet effet, comme mieux visible à la figure 6 illustrant l'ensemble d'étanchéité en coupe transversale selon la ligne VI-VI, le support de joint 117 comporte une portion centrale 129 et deux portions extrêmes 131 recourbées sur l'intérieur du joint d'étanchéité 105. Un tel support présente typiquement une section transversale (selon le plan CT) en forme de « C », de forme complémentaire à celle définie par le talon 115 du joint 105.

Le montage du joint dans son support peut par exemple être obtenu en insérant manuellement ou grâce à un outil la base 115 du joint 105 dans son support 117.

Selon l'invention, le support 117 de joint comporte une pluralité d'orifices de retenue 133 agencés dans le support de sorte à être traversés par les protubérances de retenue 123 ou ergots. Les orifices de retenue 133 sont ainsi agencés au niveau des portions extrêmes 131 du support 117 de joint.

De plus, comme précédemment évoqué, les lèvres d'étanchéité 125 du joint d'étanchéité 105 sont comprimées sur le support de joint 117, au niveau de la paroi supérieure 135 de la portion centrale 129.

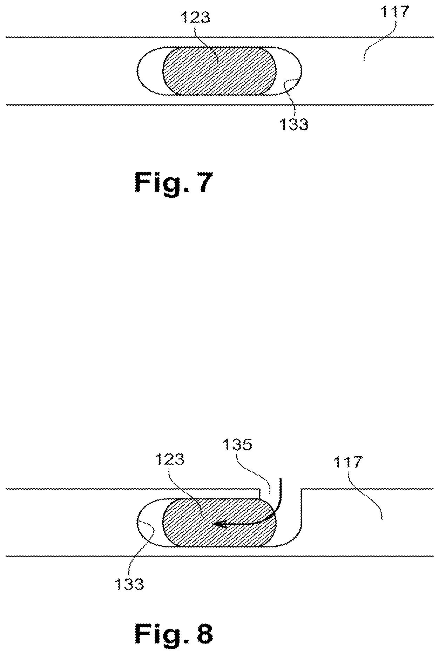

Comme représenté à la figure 7 qui est une vue de l'ensemble d'étanchéité centrée sur la protubérance de retenue 123, la protubérance de retenue 123 peut occuper partiellement l'orifice de retenue 133 qu'elle traverse. Les orifices de retenue 133 peuvent être fermés, comme représenté à la figure 7.

Selon une variante représentée à la figure 8, les orifices de retenue 133 peuvent être ouverts. A cet effet, le support de joint comporte une ouverture 135 communiquant avec l'orifice 133.

Aussi, selon une variante non représentée aux figures, la protubérance de retenue 123 peut comporter une rainure circonférentielle permettant de simplifier encore le montage du joint dans son support, et d'augmenter encore la tenue mécanique du joint d'étanchéité dans son support.

La présente invention concerne également un procédé de démontage de l'ensemble d'étanchéité 129. Selon ce procédé, on vient découper les protubérances de retenue 123 de joint d'étanchéité 105, au niveau de sa partie qui traverse l'orifice de retenue 133 du joint (c'est-à-dire la partie proéminente). Cela permet ensuite de retirer le joint d'étanchéité 105 de son support 117, par exemple pour le remplacer en cas d'endommagement.

## Revendications

1. Joint d'étanchéité (105) pour nacelle de turboréacteur d'aéronef, ledit joint comportant un talon (115) destiné à être monté dans un support de joint (117), **caractérisé en ce que** ledit talon (115) comporte :
- une pluralité de protubérances de retenue (123) espacées les unes des autres, s'étendant selon une direction sensiblement transverse à un axe longitudinal (121) dudit joint d'étanchéité (105), lesdites protubérances de retenue (123) étant destinées à traverser ledit support de joint (117) lorsque ledit joint d'étanchéité (105) est monté dans son support, et/ou
- une lèvre d'étanchéité (125) s'étendant sous ledit talon (115), selon une direction sensiblement parallèle audit axe longitudinal (121) dudit joint d'étanchéité (105), conçue pour être comprimée sur le support de joint (117) lorsque ledit joint d'étanchéité (105) est monté dans son support.

2. Joint d'étanchéité (105) selon la revendication 1, **caractérisé en ce que** les protubérances de retenue (123) sont régulièrement espacées les unes des autres ou sont non régulièrement espacées les unes des autres.

3. Joint d'étanchéité (105) selon l'une des revendications 1 ou 2, **caractérisé en ce que** les protubérances de retenue (123) sont réparties en quinconce relativement à l'axe longitudinal (121) du joint d'étanchéité (105).

4. Joint d'étanchéité (105) selon l'une quelconque des revendications 1 à 3, **caractérisé en ce que** la protubérance de retenue (123) présente une épaisseur inférieure ou supérieure ou égale à l'épaisseur du talon (115) du joint d'étanchéité (105).

5. Joint d'étanchéité (105) selon l'une quelconque des revendications 1 à 4, **caractérisé en ce que** la protubérance de retenue (123) comporte une rainure circonférentielle.

6. Joint d'étanchéité (105) selon la revendication 1 à 5, **caractérisé en ce que** la lèvre d'étanchéité (125) s'étend sur une longueur inférieure ou égale à la longueur du talon (115) du joint, de façon continue ou de façon discontinue.

7. Ensemble d'étanchéité (129) comportant :
- un joint d'étanchéité (105) selon l'une quelconque de revendications 1 à 6, et
- un support de joint (117), dans lequel est monté le talon (115) dudit joint d'étanchéité (105), **caractérisé en ce que** le support de joint (117) comporte un orifice de retenue (133) traversé par la protubérance de retenue (123) dudit joint d'étanchéité (105) et **en ce que** la lèvre d'étanchéité (125) dudit joint d'étanchéité (105) est comprimée sur ledit support de joint (117).

8. Ensemble propulsif pour aéronef comportant un turboréacteur et une nacelle supportant ledit turboréacteur, ladite nacelle comportant un dispositif d'inversion de poussée à grilles (1) comportant un capot (7), mobile entre une position rétractée assurant une continuité aérodynamique de la nacelle pour un fonctionnement de la nacelle en jet direct et entre une position déployée définissant un passage annulaire dans la nacelle pour un fonctionnement de la nacelle en jet inversé, ledit ensemble propulsif étant **caractérisé en ce qu'**il comporte un ensemble d'étanchéité (129) selon la revendication 7, dans lequel le joint d'étanchéité (105) comporte un corps d'étanchéité (119) supporté par le talon (115) dudit joint d'étanchéité (105), ledit corps d'étanchéité (119) étant en contact avec un bord de déviation (9) du turboréacteur.

9. Procédé de démontage d'un ensemble d'étanchéité (129) défini selon la revendication 7, **caractérisé en ce qu'**il comporte une étape visant à découper la protubérance de retenue (123) au niveau de sa partie qui traverse l'orifice de retenue (133) du joint d'étanchéité (105), puis à retirer le joint d'étanchéité (105) de son support (117).

## Patentansprüche

1. Dichtung (105) für eine Turbotriebwerksgondel eines Flugzeugs, wobei die Dichtung einen Wulst (115) umfasst, der dazu bestimmt ist, in einem Dichtungsträger (117) montiert zu werden, **dadurch gekennzeichnet, dass** der Wulst (115) Folgendes umfasst:
- eine Vielzahl von Haltevorsprüngen (123), die voneinander beabstandet sind und sich in einer Richtung im Wesentlichen quer zu einer Längsachse (121) der Dichtung (105) erstrecken, wobei die Haltevorsprünge (123) dazu bestimmt sind, den Dichtungsträger (117) zu durchqueren, wenn die Dichtung (105) in ihrem Träger montiert ist, und/oder
- eine Dichtlippe (125), die sich unterhalb des Wulstes (115) in einer Richtung im Wesentlichen parallel zur Längsachse (121) der Dichtung (105) erstreckt und so gestaltet ist, dass sie auf dem Dichtungsträger (117) zusammengedrückt wird, wenn die Dichtung (105) in ihrem Träger montiert ist.

2. Dichtung (105) nach Anspruch 1, **dadurch gekennzeichnet, dass** die Haltevorsprünge (123) regelmäßig voneinander beabstandet sind oder nicht regelmäßig voneinander beabstandet sind.

3. Dichtung (105) nach einem der Ansprüche 1 oder 2, **dadurch gekennzeichnet, dass** die Haltevorsprünge (123) relativ zur Längsachse (121) der Dichtung (105) versetzt angeordnet sind.

4. Dichtung (105) nach einem der Ansprüche 1 bis 3, **dadurch gekennzeichnet, dass** der Haltevorsprung (123) eine Dicke aufweist, die kleiner oder größer oder gleich der Dicke des Wulstes (115) der Dichtung (105) ist.

5. Dichtung (105) nach einem der Ansprüche 1 bis 4, **dadurch gekennzeichnet, dass** der Haltevorsprung (123) eine Umfangsrille aufweist.

6. Dichtung (105) nach Anspruch 1 bis 5, **dadurch gekennzeichnet, dass** sich die Dichtlippe (125) kontinuierlich oder diskontinuierlich über eine Länge erstreckt, die kleiner oder gleich der Länge des Wulstes (115) der Dichtung.

7. Dichtungsanordnung (129), die Folgendes umfasst:
- eine Dichtung (105) nach einem der Ansprüche 1 bis 6, und
- einen Dichtungsträger (117), in dem der Wulst (115) der Dichtung (105) montiert ist, **dadurch gekennzeichnet, dass** der Dichtungsträger (117) eine Halteöffnung (133) aufweist, die von dem Haltevorsprung (123) der Dichtung (105) durchquert wird, und dadurch, dass die Dichtlippe (125) der Dichtung (105) auf dem Dichtungsträger (117) zusammengedrückt wird.

8. Antriebsanordnung für ein Flugzeug, umfassend ein Turbotriebwerk und eine Gondel, die das Turbotriebwerk trägt, wobei die Gondel eine Schubumkehrvorrichtung mit Gittern (1) umfasst, die eine Verkleidung (7) aufweist und zwischen einer eingefahrenen Position, die eine aerodynamische Kontinuität der Gondel für einen Betrieb der Gondel im Direktstrahl gewährleistet, und einer ausgefahrenen Position, die einen ringförmigen Durchgang in der Gondel für einen Betrieb der Gondel im Umkehrstrahl definiert, beweglich ist, wobei die Antriebsanordnung **dadurch gekennzeichnet ist, dass** sie eine Dichtungsanordnung (129) nach Anspruch 7 umfasst, wobei die Dichtung (105) einen Dichtungskörper (119) umfasst, der von dem Wulst (115) der Dichtung (105) getragen wird, wobei der Dichtungskörper (119) in Kontakt mit einer Umlenkkante (9) des Turbotriebwerks steht.

9. Verfahren zur Demontage einer nach Anspruch 7 definierten Dichtungsanordnung (129), **dadurch gekennzeichnet, dass** es einen Schritt umfasst, der darauf abzielt, den Haltevorsprung (123) auf Höhe seines Abschnitts zu schneiden, der die Halteöffnung (133) der Dichtung (105) durchquert, und anschließend die Dichtung (105) aus ihrem Träger (117) entfernt.

## Claims

1. A seal (105) for an aircraft turbojet engine nacelle, said seal including a bead (115) intended to be mounted in a seal support (117), **characterized in that** said bead (115) includes:
- a plurality of retaining protrusions (123) which are spaced apart from each other, extending in a direction which is substantially transverse to a longitudinal axis (121) of said seal (105), said retaining protrusions (123) being intended to pass through said seal support (117) when said seal (105) is mounted in the support thereof, and/or
- a sealing lip (125) extending below said bead (115), in a direction which is substantially parallel to said longitudinal axis (121) of said seal (105), designed to be compressed on the seal support (117) when said seal (105) is mounted in the support thereof.

2. The seal (105) according to claim 1, **characterized in that** the retaining protrusions (123) are regularly spaced apart from each other or are not regularly spaced apart from each other.

3. The seal (105) according to any of claims 1 or 2, **characterized in that** the retaining protrusions (123) are distributed in a staggered manner relative to the longitudinal axis (121) of the seal (105).

4. The seal (105) according to any one of claims 1 to 3, **characterized in that** the retaining protrusion (123) has a thickness which is less than or greater than or equal to the thickness of the bead (115) of the seal (105).

5. The seal (105) according to any one of claims 1 to 4, **characterized in that** the retaining protrusion (123) includes a circumferential groove.

6. The seal (105) according to claim 1 to 5, **characterized in that** the sealing lip (125) extends over a length which is less than or equal to the length of the bead (115) of the seal, continuously or discontinuously.

7. A sealing assembly (129) including:
- a seal (105) according to any one of claims 1 to 6, and
- a seal support (117), in which the bead (115) of said seal (105) is mounted, **characterized in that** the seal support (117) includes a retaining orifice (133) through which the retaining protuberance (123) of said seal (105) passes and **in that** the sealing lip (125) of said seal (105) is compressed on said seal support (117).

8. A propulsion unit for an aircraft including a turbojet engine and a nacelle supporting said turbojet engine, said nacelle including a cascade thrust reverser device (1) including a cowl (7), which is movable between a retracted position ensuring an aerodynamic continuity of the nacelle for an operation of the nacelle in direct jet mode and between a deployed position defining an annular passage in the nacelle for an operation of the nacelle in reverse jet mode, said propulsion unit being **characterized in that** it includes a sealing assembly (129) according to claim 7, wherein the seal (105) includes a sealing body (119) supported by the bead (115) of said seal (105), said sealing body (119) being in contact with a deflection edge (9) of the turbojet engine.

9. A method for dismounting a sealing assembly (129) defined according to claim 7, **characterized in that** it includes a step aimed at cutting the retaining protrusion (123) at the portion thereof which passes through the retaining orifice (133) of the seal (105), then at removing the seal (105) from the support (117) thereof.
